# EUROPEAN PATENT APPLICATION

(11) **EP 4 293 742 A1**
(43) Date of publication of application: **20.12.2023**
(21) Application number: 22867742.3
(22) Date of filing: 08.09.2022
(51) Int. Cl.: H01M 4/13, H01M 4/131, H01M 10/42, H01G 11/28, H01G 11/30, H01G 11/14, H01M 10/052, H01M 4/02

(54) **ELECTRODE FOR ELECTROCHEMICAL DEVICE AND ELECTROCHEMICAL DEVICE COMPRISING SAME**

(30) Priority: 09.09.2021 KR 20210120653; 01.09.2022 KR 20220110984
(71) Applicant: LG Energy Solution, Ltd., Seoul 07335 (KR)
(72) Inventor: KWON, Soon-Ho, Daejeon 34122 (KR); KIM, Min-Gyu, Daejeon 34122 (KR); PARK, Sung-Bin, Daejeon 34122 (KR); CHO, Woo-Hyung, Daejeon 34122 (KR)
(74) Representative: Plasseraud IP
(86) International application number: PCT/KR2022/013560
(87) International publication number: WO 2023/038474

(57) **Abstract**

The present disclosure provides an electrode for an electrochemical device comprising a conductive polymer layer that is located on at least one surface of the electrode current collector; and an electrode active material layer that is located on an upper surface of the conductive polymer layer and includes an electrode active material and a binder polymer, wherein the conductive polymer layer includes a poly(thiophene)-based polymer represented by Chemical Formula 1 in the detailed description.

## Description

### [TECHNICAL FIELD]

### Cross Citation with Related Application(s)

This application claims the benefit of Korean Patent Application No. 2021-0120653 filed on September 9, 2021 and Korean Patent Application No. 2022-0110984 filed on September 1, 2022 in the Korean Intellectual Property Office, the entire contents of which are incorporated herein by reference.

The present disclosure relates to an electrode for an electrochemical device and an electrochemical device comprising the same. More specifically, the present disclosure relates to an electrode for an electrochemical device having improved safety, and an electrochemical device comprising the same.

### [BACKGROUND]

Recently, energy storage technology has been given increasing attentions. Efforts into research and development for electrochemical devices have been actualized more and more, as the application of energy storage technology has been extended to energy for cellular phones, camcorders and notebook PC and even to energy for electric vehicles.

Such an electrochemical device can be largely classified into a positive electrode, a negative electrode, a separator, and an electrolyte solution. However, the electrochemical device may ignite or explode due to overcharge, high temperature exposure, external impact, or the like. If the electrochemical device is overcharged or exposed to high temperatures to rise the internal temperature of the battery and shrink the separator, or, if the internal structure of the electrochemical device is destroyed by an external impact, a short circuit phenomenon occurs where the positive electrode and the negative electrode meet, resulting in thermal runaway.

When a short circuit phenomenon occurs, the movement of electrons, including lithium ions, is concentrated through the portion where the positive electrode and the negative electrode directly contact with each other, thereby promoting heat generation inside the battery. Consequently, it is known that the risk of volume expansion and ignition due to gas generation increases.

Therefore, there is a great need for a technology that can reduce the risk of ignition of a battery due to a short circuit phenomenon.

### [DETAILED DESCRIPTION OF THE INVENTION]

### [Technical Problem]

The present disclosure provides an electrode for an electrochemical device having improved safety, and an electrochemical device comprising the same.

### [Technical Solution]

According to one aspect of the present disclosure, there is provided an electrode for an electrochemical device.

The electrode for an electrochemical device according to a first embodiment comprises:
an electrode current collector;
a conductive polymer layer that is located on at least one surface of the electrode current collector; and
an electrode active material layer that is located on an upper surface of the conductive polymer layer and includes an electrode active material and a binder polymer,
wherein the conductive polymer layer includes a poly(thiophene)-based polymer represented by Chemical Formula 1.

A second embodiment is the electrode for an electrochemical device according to the first embodiment, wherein an adhesive strength between the conductive polymer layer and the electrode current collector may be 200 gf/20 mm or more.

A third embodiment is the electrode for an electrochemical device according to the first embodiment or the second embodiment, wherein an interface resistance between the conductive polymer layer and the electrode active material layer may be 3.0 ohm·cm² or less.

A fourth embodiment is the electrode for an electrochemical device according to any one of the first embodiment to the third embodiment, wherein at least one of a total number of carbon atoms of R₁ and R₂ and a total number of carbon atoms of R₃ and R₄ may be 5 or more.

A fifth embodiment is the electrode for an electrochemical device according to any one of the first embodiment to the fourth embodiment, wherein the m or n may be 0.

A sixth embodiment is the electrode for an electrochemical device according to any one of the first embodiment to the fifth embodiment, wherein the conductive polymer layer may have a thickness of 0.1 *µ*m to 8 *µ*m.

A seventh embodiment is the electrode for an electrochemical device according to any one of the first embodiment to the sixth embodiment, wherein the conductive polymer layer may further comprise poly(aniline)-based polymer; poly(pyrrole)-based polymer; poly(phenylene)-based polymer; poly(acetylene)-based polymer; derivatives thereof; or two or more kinds thereof.

An eighth embodiment is the electrode for an electrochemical device according to any one of the first embodiment to the seventh embodiment, wherein the electrode for an electrochemical device may be a positive electrode.

In order to achieve the above object, according to another aspect of the present disclosure, there is provided an electrochemical device comprising a positive electrode, a negative electrode, and a separator interposed between the positive electrode and the negative electrode,
wherein the positive electrode or the negative electrode comprises the electrode for an electrochemical device according to any one of the first embodiment to the eighth embodiment.

### [Advantageous Effects]

An electrode for an electrochemical device according to one embodiment of the present disclosure is configured to locate a conductive polymer layer between the electrode current collector and the electrode active material layer, so that it can prevent direct contact between electrode current collectors when a short circuit occurs, while not interfering with a conductive path between an electrode current collector and an electrode active material layer during normal operation of a battery.

An electrode for an electrochemical device according to an embodiment of the present disclosure can increase short circuit resistance and prevent a rapid flow of short-circuit current to ensure safety, as the conductive polymer layer located between the electrode current collector and the electrode active material layer functions as a resistance layer.

### [BRIEF DESCRIPTION OF THE DRAWINGS]

The following drawings attached thereto illustrate preferred embodiments of the invention, and serve to further understand the technical idea of the invention together with the contents of the invention described above. The disclosure should not be construed as being limited only to the embodiments as illustrated in the drawings.

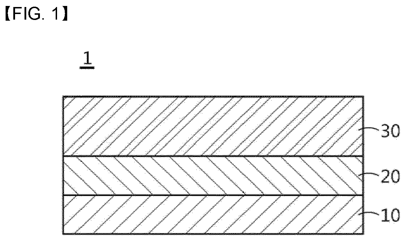

Fig. 1 is a diagram schematically showing an electrode for an electrochemical device according to one embodiment of the present invention.

### [DETAILED DESCRIPTION OF THE EMBODIMENTS]

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present invention is not limited to the embodiments described below.

An electrode for an electrochemical device according to one embodiment of the present disclosure comprises:
an electrode current collector;
a conductive polymer layer that is located on at least one surface of the electrode current collector; and
an electrode active material layer that is located on an upper surface of the conductive polymer layer and includes an electrode active material and a binder polymer,
wherein the conductive polymer layer includes a poly(thiophene)-based polymer represented by the following Chemical Formula 1: 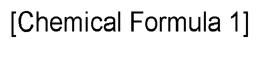 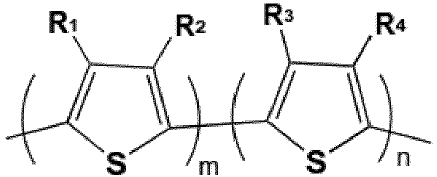
wherein, in Chemical Formula 1,
   R₁, R₂, R₃ and R₄ are each independently hydrogen or a substituted or unsubstituted alkyl group having 1 to 20 carbon atoms, at least one of a total number of carbon atoms of R₁ and R₂ and a total number of carbon atoms of R₃ and R₄ is 3 or more, m and n are each independently an integer of 0 to 20,000, and m+n > 0.

In Chemical Formula 1, when m and n are each an integer of 1 or more, the monomer represented by the repeating unit m and the monomer represented by the repeating unit are for showing structures different from each other.

In one embodiment of the present disclosure, when m and n in Chemical Formula 1 are each an integer of 1 or more, the polythiophene-based polymer represented by Chemical Formula 1 may be an alternating polymer, a random polymer or a block polymer of a monomer represented by repeating unit m and a monomer represented by repeating unit n, a random polymer, but is not limited thereto.

Fig. 1 is a diagram schematically showing an electrode for an electrochemical device according to one embodiment of the present disclosure.

Referring to Fig. 1, an electrode 1 for an electrochemical device according to an embodiment of the present disclosure includes an electrode current collector 10.

The electrode current collector 10 can be used without particular limitation as long as it has conductivity without causing a chemical change in the electrochemical device. For example, in one embodiment of the present disclosure, as the electrode current collector 10, copper; stainless steel; aluminum; nickel; titanium; calcined carbon; copper, aluminum or stainless steel having a surface treated with carbon, nickel, titanium, silver, etc., aluminum-cadmium alloy, and the like can be used. The current collector can form irregularities on the surface thereof to enhance the bonding strength of the active material, and it can be used in various forms such as a film, a sheet, a foil, a net, a porous body, a foaming body, and a non-woven fabric structure.

In one embodiment of the present disclosure, when the electrode 1 for an electrochemical device is a positive electrode, the electrode current collector 10 may include stainless steel; aluminum; nickel; titanium; calcined carbon; or aluminum or stainless steel having a surface treated with carbon, nickel, titanium, silver, chromium, and the like.

In another embodiment of the present disclosure, when the electrode 1 for an electrochemical device is a negative electrode, the electrode current collector 10 may include copper; stainless steel; nickel; titanium; calcined carbon; or aluminum or stainless steel having a surface treated with carbon, nickel, titanium, silver, chromium, or the like, aluminum-cadmium alloy, and the like.

In one embodiment of the present disclosure, the electrode current collector 10 may have a thickness of 3 to 500 *µ*m, for example, 10 *µ*m to 50 *µ*m, or 10 *µ*m to 20 *µ*m, but is not particularly limited thereto.

Referring to Fig. 1, an electrode 1 for an electrochemical device according to one embodiment of the present disclosure forms a conductive polymer layer 20 on at least one surface of the electrode current collector 10.

If the electrochemical device is overcharged or exposed to high temperatures and the internal temperature of the electrochemical element rises, the separator shrinks, which may cause a short circuit phenomenon between the positive electrode and the negative electrode. Alternatively, the internal structure of the electrochemical device may be destroyed by an external impact, which may cause a short circuit between the positive electrode and the negative electrode.

Such short circuits include a soft short circuit caused by contact between a positive electrode active material and a negative electrode active material, or hard short circuit caused by direct contact between the positive current collector and the negative current collector, or between the positive current collector and the negative active material, or between the negative current collector and the positive active material. The hard short circuit has a lower short circuit resistance, resulting in more heat generation, which is a serious threat to the safety of the battery.

The conductive polymer layer 20 is formed on at least one surface of the electrode current collector 10 and functions as a protective film for the electrode current collector 10 when a short circuit phenomenon occurs. The conductive polymer layer 20 is formed on at least one surface of the electrode current collector 10, thus being able to prevent the electrode current collector 10 from directly contacting the opposing electrode current collector or the opposing electrode active material. Thereby, it is possible to prevent a hard short circuit from occurring.

In order for such a conductive polymer layer 20 to function as a protective film for the electrode current collector 10, even when the conductive polymer layer 20 is strongly bonded to the electrode current collector 10 and a short circuit phenomenon occurs, the conductive polymer layer 20 should not separate from the electrode current collector 10. If the conductive polymer layer 20 is easily peeled off from the electrode current collector 10, it cannot function as a protective film for the electrode current collector 10 when a short circuit phenomenon occurs.

In one embodiment of the present disclosure, the adhesive strength between the conductive polymer layer 20 and the electrode current collector 10 may be 200 gf/20 mm or more, specifically 210 gf/20 mm or more. The upper limit of the adhesive strength between the conductive polymer layer and the electrode current collector is not particularly limited, but for example, it may be 400 gf/20 mm or less, or 350 gf/20 mm or less. When the adhesive strength between the conductive polymer layer 20 and the electrode current collector 10 satisfies the above range, the conductive polymer layer 20 does not detach from the electrode current collector 10 when a short circuit phenomenon occurs, but can easily be bonded strongly to the electrode current collector 10, which makes it easier for the conductive polymer layer 20 to function as a protective film for the electrode current collector 10.

The adhesive strength between the conductive polymer layer 20 and the electrode current collector 10 can be known by attaching and fixing the electrode current collector 10 having the conductive polymer layer 20 formed thereon to a glass plate using double-sided tape, and then measuring the strength when the electrode current collector 10 is peeled off at an angle of 90° at a speed of 20 mm/min at 25°C.

Moreover, the conductive polymer layer 20 is located between the electrode current collector 10 and the electrode active material layer described later, and thus can increase the interface resistance between the electrode current collector 10 and the electrode active material layer, as compared to a case where the electrode current collector 10 and the electrode active material layer directly contact with each other, thereby being able to prevent the electrochemical device from igniting due to the interface resistance even if a short circuit phenomenon occurs.

In one embodiment of the present disclosure, the interface resistance between the conductive polymer layer 20 and the electrode active material layer may be increased by 0.1 to 1000%, or 1 to 500% as compared with a conventional case in which the current collector and the electrode active material layer directly contact with each other.

In one embodiment of the present disclosure, an interface resistance between the conductive polymer layer 20 and the electrode active material layer may be 3.0 ohm·cm² or less, 2.5 ohm·cm² or less, or 0.01 ohm·cm² to 2.5 ohm·cm². When the interface resistance between the conductive polymer layer 20 and the electrode active material layer satisfies the above range, it can make it easy to prevent the phenomenon that the electrochemical element ignites when a short circuit phenomenon occurs, even while being able to securing the cycle characteristics. For example, it may be easy to prevent the electrochemical device from igniting when a short circuit occurs, while preventing cycle efficiency from being less than 80%.

The interface resistance between the conductive polymer layer 20 and the electrode active material layer can be measured with a multiprobe tester.

Further, the conductive polymer layer 20 includes a polymer that shows conductivity by interacting with a salt in an electrolyte solution, thereby enabling a conductive network between the electrode current collector 10 and the electrode active material layer described later. Accordingly, when the battery is operating normally, the performance of the electrode can be maintained even when the conductive polymer layer 20 is present between the electrode current collector 10 and the electrode active material layer.

In one embodiment of the present disclosure, in Chemical Formula 1 that represents the polythiophene-based polymer contained in the conductive polymer layer, at least one of a total number of carbon atoms of R₁ and R₂ and a total number of carbon atoms of R₃ and R₄ is 5 or more, for example, 6 to 20, 7 to 20, 8 to 20, 8 to 15, or 8 to 10. When at least one of a total number of carbon atoms of R₁ and R₂ and a total number of carbon atoms of R₃ and R₄ is within the above range, it can exhibit an advantageous effect in that the lifespan of a battery using the same can be further improved while excellently remaining the adhesion strength between the conductive polymer layer and the electrode current collector using the same, but the present disclosure is not limited thereto.

In one embodiment of the present disclosure, in Chemical Formula 1 that represents the polythiophene-based polymer contained in the conductive polymer layer, the m or n may be 0. When the m or n is 0, it can exhibit an advantageous effect in that the lifespan of a battery using the same can be further improved while excellently remaining the adhesion strength between the conductive polymer layer and the electrode current collector using the same, but the present disclosure is not limited thereto.

In one embodiment of the present disclosure, the weight average molecular weight (Mw) of the conductive polymer may be, for example, 10,000 g/mol to 100,000 g/mol. Specifically, the weight average molecular weight (Mw) of the conductive polymer may be 10,000 g/mol to 80,000 g/mol or 30,000 g/mol to 60,000 g/mol. When the weight average molecular weight of the conductive polymer is within the above range, there may be advantageous effects in terms of the adhesion strength and interface resistance between the conductive polymer layer and the electrode active material layer, but the present disclosure is not limited thereto.

As used herein, the weight average molecular weight of the conductive polymer may be a value measured using gel permeation chromatography. Specifically, the weight average molecular weight may be a value measured under the following conditions using PL GPC220 (Agilent Technologies).
- Column: PL Olexis (Polymer Laboratories)
- Solvent: TCB (Trichlorobenzene)
- Flow rate: 1.0 ml/min
- Sample concentration: 1.0 mg/ml
- Injection amount: 200 *µℓ*
- Column temperature: 160 °C
- Detector: Agilent High Temperature RI detector
- Standard: Polystyrene (corrected by a cubic function)

In one embodiment of the present disclosure, the thickness of the conductive polymer layer may be, for example, 0.1 *µ*m to 15 *µ*m, specifically 0.1 *µ*m to 10 *µ*m, 0.1 *µ*m to 8 *µ*m, 0.5 *µ*m to 10 *µ*m, 0.5 to 8 *µ*m, 0.5 *µ*m to 5 *µ*m, 1 *µ*m to 5 *µ*m, or 1 *µ*m to 3 *µ*m. When the thickness of the conductive polymer layer is within the above range, it can exhibit an advantageous effect in terms of improving the interface resistance between the conductive polymer layer and the electrode current collector and thus improving the lifespan characteristics of the battery, but the present disclosure is not limited thereto.

As used herein, the "thickness" of the conductive polymer layer can represent a value measured by a known method for measuring thickness. The method for measuring the thickness may be, but not limited to, a value measured using, for example, a thickness measuring system (Mitutoyo VL-50S-B).

In one embodiment of the present disclosure, the conductive polymer layer 20 may, in addition to the polythiophene-based polymer as a conductive polymer, further include poly(aniline)-based polymer; poly(pyrrole)-based polymer; poly(phenylene)-based polymer; poly(acetylene)-based polymer; derivatives thereof; or two or more kinds thereof.

The poly(aniline)-based polymer is not particularly limited as long as it includes an aniline repeating unit. For example, it may include a homopolymer composed of only aniline repeating units, or may include a copolymer of aniline monomers and other monomers.

The poly(pyrrole)-based polymer is not particularly limited as long as it includes a pyrrole repeating unit. For example, it may include a homopolymer composed of only pyrrole repeating units, or may include a copolymer of a pyrrole monomer and another monomer.

The poly(pyrrole)-based polymer may include a structure represented by the following Chemical Formula 2 or 3: 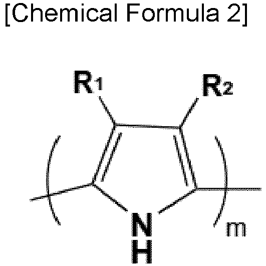 wherein, in Chemical Formula 2,
R₁ and R₂ are each independently hydrogen or a substituted or unsubstituted alkyl group having 1 to 20 carbon atoms, and
m is 1 to 20,000. 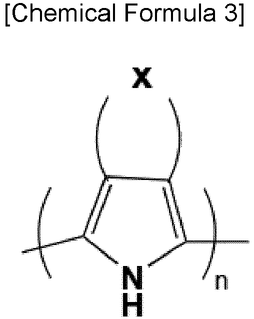
wherein, in Chemical Formula 3,
X is 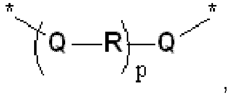
Q is oxygen or sulfur,
R is a substituted or unsubstituted alkylene group having 1 to 5 carbon atoms,
p is a natural number of 1 or more, and
n is 1 to 20,000.

Throughout this specification, the "substituted" refers to being substituted with alkyl groups, such as a methyl group, an ethyl group, an isopropyl group, and a butyl group; alkoxy groups, such as a methoxy group and an ethoxy group; arene group; alcohol group; carboxylic acid groups, and the like.

The poly(phenylene)-based polymer is not particularly limited as long as it includes a phenylene repeating unit. For example, it may include a homopolymer composed of only phenylene repeating units, or may include a copolymer of a phenylene monomer and another monomer.

The poly(phenylene)-based polymer may include any one or more of the following structures: 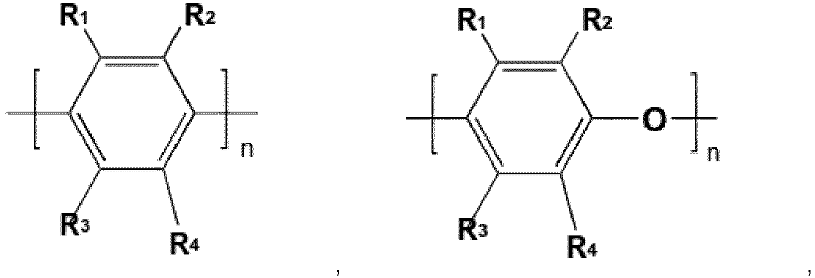 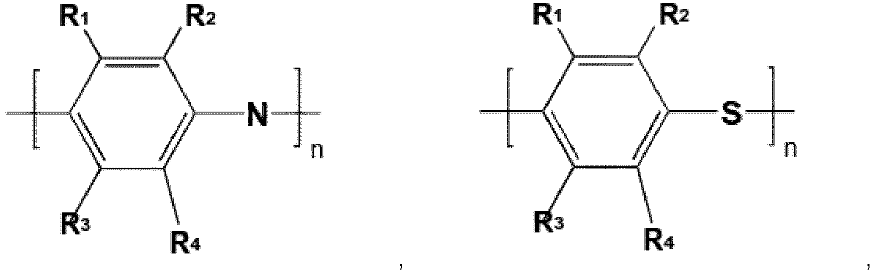 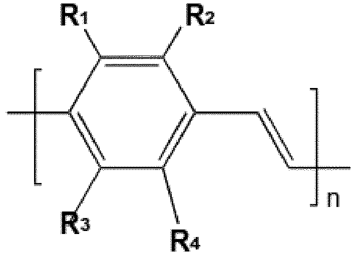
wherein, R₁, R₂, R₃ and R₄ are each independently hydrogen or a substituted or unsubstituted alkyl group having 1 to 10 carbon atoms, and
n is 1 to 20,000.

The poly(acetylene)-based polymer is not particularly limited as long as each one of the carbon and hydrogen atoms contains a repeating unit having a polyene structure, for example, a repeating unit having a (CH)ₓ structure. For example, it may include a homopolymer consisting only of repeating units having a polyene structure, or may include a copolymer of a polyene monomer and another monomer.

The poly(acetylene)-based polymer may have a structure represented by the following Chemical Formula 4: 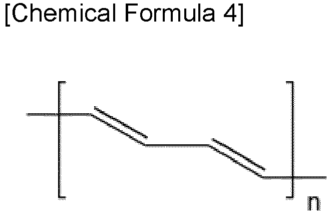 wherein, in Chemical Formula 4, n is 1 to 20,000.

In one embodiment of the present disclosure, the conductive polymer layer 20 may be formed by coating a conductive polymer solution onto the electrode current collector 10 and then drying it.

Referring to Fig. 1, an electrode 1 for an electrochemical device according to one embodiment of the present disclosure comprises an electrode active material layer 30 on an upper surface of the conductive polymer layer 20. The electrode active material layer 30 includes an electrode active material and a binder polymer.

In one embodiment of the present disclosure, the electrode active material layer may further include a conductive material in addition to the electrode active material and the binder polymer.

In one embodiment of the present disclosure, when the electrode 1 for an electrochemical device is a positive electrode, the electrode active material (i,e., positive electrode active material) may include, for example, a lithium transition metal oxide; a lithium metal iron phosphate; lithium nickel-manganese-cobalt oxide; an oxide in which a part of lithium nickel-manganese-cobalt oxide is substituted with another transition metal; or two or more kinds thereof, but are not limited thereto. Specifically, the positive electrode active material may include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 - 0.33), LiMnOs, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 - 0.1) or Li₂Mn₃MO₈ (where, M = Fe, Co, Ni, Cu or Zn); lithium metal phosphate LiMPO₄ (where M is M = Fe, CO, Ni, or Mn); lithium nickel-manganese-cobalt oxide Li₁₊ₓ(NiₐCo_{b}Mn_{c})₁₋ₓO₂ (where, x = 0 ~ 0.03, a = 0.3 - 0.95, b = 0.01 ~ 0.35, c = 0.01 - 0.5, a+b+c=1); an oxide in which a part of lithium nickel-manganese-cobalt oxide is substituted with aluminum Liₐ[Ni_{b}Co_{c}Mn_{d}Alₑ]_{1-f}M1_{f}O₂ (where, M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); an oxide in which a part of lithium nickel-manganese-cobalt oxide is substituted with another transition metal Li₁₊ₓ(NiₐCo_{b}Mn_{c}M_{d})₁₋ₓO₂ (where, x = 0 ~ 0.03, a = 0.3 - 0.95, b = 0.01 ~ 0.35, c = 0.01 ~ 0.5, d = 0.001 - 0.03, a+b+c+d=1, M is any one selected from the group consisting of Fe, V, Cr, Ti, W, Ta, Mg and Mo), disulfide compounds; Fe₂(MoO₄)₃, and the like, but are not limited thereto.

In another embodiment of the present disclosure, when the electrode 1 for an electrochemical device is a negative electrode, the electrode active material (i.e., negative electrode active material) may typically include a carbon material, lithium metal, a silicon-based material, tin, or the like, which can occlude and release lithium ions. The carbon material may include natural graphite, artificial graphite, low crystalline carbon, and high crystalline carbon. Typical examples of the low crystalline carbon include soft carbon and hard carbon, and typical examples of the high crystalline carbon may include natural graphite, kish graphite, pyrolytic carbon, mesophase pitch-based carbon fiber, meso-carbon microbeads, mesophase pitches, and high-temperature calcined carbon such as petroleum or coal tar pitch derived cokes. The silicon-based material may include silicon dioxide and the like.

The binder polymer may include polyvinylidene fluoride, polyvinyl alcohol, carboxymethylcellulose, hydroxypropylene cellulose, diacetylene cellulose, polyvinyl chloride, polyvinylpyrrolidone, polytetrafluoroethylene, polyvinylidene fluoride, polyethylene or polypropylene, acrylonitrile-butadiene rubber, styrene-butadiene rubber, acrylic rubber, or two or more kinds thereof.

The conductive material is not particularly limited as long as it has conductivity without causing a chemical change in the corresponding battery. The conductive material may include, for example, graphite such as natural graphite or artificial graphite; carbon blacks such as carbon black, acetylene black, ketjen black, channel black, furnace black, lamp black, and thermal black; conductive fibers such as carbon fiber and metal fiber; conductive tubes such as carbon nanotube; fluorocarbons; metal powders such as aluminum and nickel powder; conductive whiskers such as zinc oxide and potassium titanate; conductive metal oxides such as titanium oxide; polyphenylene derivatives; conductive materials such as graphene, and the like.

In one embodiment of the present disclosure, the weight ratio of the electrode active material and the binder polymer may be 90:10 to 98:2, 95:5 to 98:2, or 97:3 to 98:2.

In another embodiment of the present disclosure, when the electrode active material layer further includes a conductive material, the weight ratio of the electrode active material, the conductive material, and the binder polymer may be 90:5:5 to 98:1:1, or 95:2:3 to 98:1:1, or 97:1:2 to 98:1:1.

The electrode active material layer 30 may be prepared by a process in which a slurry for forming an electrode active material layer, in which an electrode active material, a binder polymer, and, optionally, a conductive material is mixed with a dispersion medium, is coated onto the upper surface of the conductive polymer layer 20, dried, and then rolled.

The electrode for an electrochemical device according to one embodiment of the present disclosure is configured such that a conductive polymer layer is present on at least one surface of an electrode current collector, which can thus prevent a direct short circuit between the electrode current collectors when a short circuit phenomenon occurs.

The potential of the positive electrode for an electrochemical device and the potential at which the conductive polymer layer 20 interacts with the salt in the electrolyte solution are similar, which can thus be advantageous to apply the conductive polymer layer 20 to the positive electrode. When the electrode for an electrochemical device is a positive electrode, it can protect the positive electrode from a hard short path, which can thus be more advantageous to secure the safety of the electrochemical device.

In particular, the electrode for an electrochemical device according to one embodiment of the present disclosure has a conductive polymer layer on at least one surface of the electrode current collector, as compared with a case where the electrode active material layer and the conductive polymer are included together with the electrode active material layer, so that the conductive polymer layer can wrap the electrode current collector, which can be more effective in improving the safety of the electrode when a short circuit phenomenon occurs.

The electrode for an electrochemical device according to one embodiment of the present disclosure can be manufactured as an electrochemical device together with a separator.

The electrochemical device according to one embodiment of the present disclosure can be further improved in safety by comprising an electrode for an electrochemical device according to one embodiment of the present disclosure.

The electrochemical device includes all devices that undergo an electrochemical reaction, and specific examples thereof include all kinds of primary and secondary batteries, fuel cells, solar cells, or capacitors such as supercapacitor devices , and the like.

In one embodiment of the present disclosure, the electrochemical device may be a lithium secondary battery including a lithium metal secondary battery, a lithium-ion secondary battery, a lithium polymer secondary battery, or a lithium-ion polymer secondary battery , and the like.

The separator is not particularly limited, and is composed of only a porous polymer substrate, or may include a porous polymer substrate; and an organic-inorganic composite porous layer formed on at least one surface of the porous polymer substrate and containing a plurality of inorganic particles and a binder polymer. The separator is interposed between the positive electrode and the negative electrode and serves to insulate between the positive electrode and the negative electrode.

The porous polymer substrate can be used without limitation as long as it a porous polymer substrate commonly used in the art. For example, a polyolefin-based porous polymer membrane or non-woven fabric can be used as the porous polymer substrate, but is not particularly limited thereto.

The polyolefin-based porous polymer membrane may include a membrane made from polyethylene such as high-density polyethylene, linear low-density polyethylene, low-density polyethylene, or ultra-high molecular weight polyethylene, polyolefin polymers such as polypropylene, polybutylene, and polypentene, or two or more kinds thereof.

The nonwoven fabric may include, in addition to the polyolefin-based nonwoven fabric, for example, a nonwoven fabric made from polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, or two or more kinds thereof.

The structure of the nonwoven fabric may be a spunbond nonwoven fabric or a melt blown nonwoven fabric consisting of long fibers.

The thickness of the porous polymer substrate is not particularly limited, but may be 3 *µ*m to 50 *µ*m, or 3 *µ*m to 15 *µ*m. The pore size and porosity present in the porous polymer substrate are also not particularly limited, but may be 0.01 *µ*m to 50 *µ*m and 10% to 95%, respectively.

In one embodiment of the present disclosure, the inorganic particles are not particularly limited as long as they are electrochemically stable. That is, the inorganic particles that can be used herein are not particularly limited as long as oxidation and/or reduction reactions do not occur in the operating voltage range (e.g., 0 to 5V based on Li/Li⁺) of the battery to be applied. The inorganic particles may include high dielectric constant inorganic particles having a dielectric constant of 5 or more or 10 or more, inorganic particles having lithium-ion transfer capability, or two or more kinds thereof. The inorganic particles having a dielectric constant of 5 or more may be BaTiOs, BaSO₄, Pb(Zr,Ti)O₃ (PZT), Pb₁₋ₓLaₓZr_{1-y}Ti_{y}O₃ (PLZT, wherein, 0<x<1 , 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, Y₂O₃, SiO₂, Al₂O₃, γ-AlOOH, Al(OH)₃, SiC, TiO₂, or a mixture of two or more of them, but are not limited thereto.

In one embodiment of the present disclosure, the size of the inorganic particles is not limited, but may have an average particle diameter in the range of 0.01 to 10 *µ*m, or 0.05 to 1.0 *µ*m in order to form an organic-inorganic composite porous layer having uniform thickness and an appropriate porosity. At this time, the average particle diameter of the inorganic particles means a particle diameter (D50) at which the cumulative volume from a smaller particle size side is 50%, which measures the particle size distribution after classification with a general particle size distribution meter, and calculates based on the measurement results. This particle size distribution can be measured by laser diffraction analysis.

In one embodiment of the present disclosure, the binder polymer included in the separator may include polyvinylidene fluoride(PVdF), polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethyl cellulose, cyanoethylsucrose, pullulan, carboxyl methyl cellulose, acrylonitrile-styrene-butadiene copolymer, polyimide), or two or more kinds thereof, but are not limited thereto.

In one embodiment of the present disclosure, the content ratio of the inorganic particles and the binder polymer included in the separator may be 20:80 to 99.9:0.1, 50:50 to 99.5:0.5, or 70:30 to 80:20. When the content ratio of the inorganic particles and the binder polymer is within the above range, it is possible to sufficiently secure an empty space formed between the inorganic particles while securing sufficient adhesion strength between the inorganic particles.

In one embodiment of the present disclosure, the organic-inorganic composite porous layer is bound to each other by the binder polymer in a state in which the inorganic particles are filled and are in contact with each other, thereby forming interstitial volumes between the inorganic particles. An interstitial volume between the inorganic particles becomes an empty space and may have a structure that forms a hole.

In one embodiment of the present disclosure, the electrochemical device includes an electrolyte solution, wherein the electrolyte solution may include an organic solvent and a lithium salt. In addition, an organic solid electrolyte, an inorganic solid electrolyte, or the like can be used as the electrolyte solution.

As the organic solvent, for example, an aprotic organic solvent, such as N-methyl-2-pyrrolidone, ethylene carbonate, propylene carbonate, butylene carbonate, dimethyl carbonate, diethyl carbonate, gamma-butyrolactone, 1,2-dimethoxy ethane, tetrahydroxyfuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-ibidazolidinone, propylene carbonate derivatives, tetrahydrofuran derivatives, ether, methyl propionate, ethyl propionate can be used.

The lithium salt is a material readily soluble in the organic solvent, and for example, LiCl, LiBr, Lil, LiClO₄, LiBF₄, LiB₁₀Cl₁₀, LiPFe, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, lithium lower aliphatic carboxylate, lithium 4-phenyl borate, imide, and the like can be used.

In addition, for the purpose of improving charge/discharge characteristics, flame retardancy, and the like, for example, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride or the like can be added to the electrolyte solution. If necessary, a halogen-containing solvent such as carbon tetrachloride or ethylene trifluoride may be further included in order to impart incombustibility, and carbon dioxide gas may be further included in order to improve high-temperature storage characteristics,

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups, and the like.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The injection of the electrolyte solution can be performed at an appropriate stage during the manufacturing process of the electrochemical device depending on the manufacturing process and required physical properties of the final product. That is, it can be applied before assembling the electrochemical device or at the final stage of assembling the electrochemical device.

As a process of applying the separator to an electrochemical device, lamination, stacking, and folding processes of the separator and the electrode can be performed in addition to winding, which is a general process.

The separator can be interposed between a positive electrode and a negative electrode of the electrochemical device, and can be interposed between adjacent cells or electrodes when a plurality of cells or electrodes are aggregated to form an electrode assembly. The electrode assembly may have various structures such as a simple stack type, a jelly-roll type, a stack-folding type, and a lamination-stack type.

The appearance of the electrochemical device is not particularly limited, but may be a cylindrical shape using a can, a prismatic shape, a pouch shape, a coin shape, or the like.

Hereinafter, the embodiments will be described in detail with reference to examples in order to aid understanding of the present disclosure. However, the embodiments according to the present disclosure can be modified in many different forms, and the scope of the present invention should not be construed as being limited to the embodiments set forth herein. Rather, these embodiments are provided so that the disclosure will be more fully explained to those of average skill in the art.

### Example 1

### Synthesis of conductive polymer and preparation of conductive polymer solution

A conductive polymer was synthesized according to the following [Reaction Scheme 1].

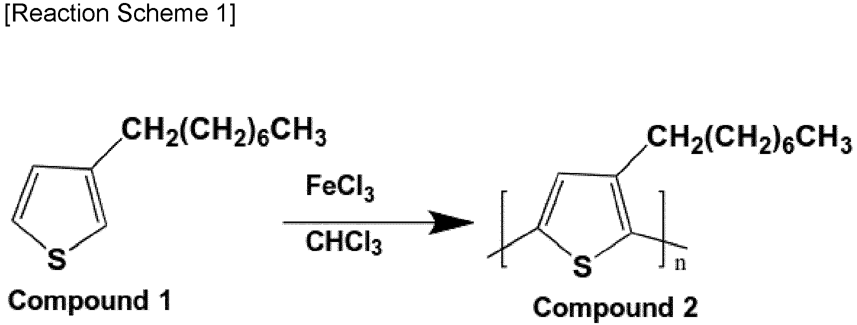

Specifically, 1 g (5.093 mmol, 1 eq) of 3-octylthiophene (Compound 1) as a monomer was added to a solution in which 2.48 g (15.3 mmol, 3 eq) of iron(III) chloride was dissolved in 70 mL of chloroform, and the mixture was stirred at room temperature for 24 hours. The mixed solution was placed in an osmosis membrane with a MWCO (molecular weight of cut off) of 5000, and then immersed in 200 mL of acetonitrile solvent to selectively remove unreacted iron(III) chloride and remaining reactants. The residue precipitated inside the osmosis membrane was washed with methanol, and dried at room temperature. Thereby, a polythiophene-based polymer having the same structure as Compound 2 and having a weight average molecular weight of 50,000 g/mol was obtained as a conductive polymer.

The conductive polymer was dissolved in chloroform to prepare a 1 wt.% conductive polymer solution, and filtered using a poly(tetrafluoroethylene) (PTFE) filter with pores of 1 *µ*m.

### Manufacture of electrode

The conductive polymer solution was coated onto one surface of the body and electrode tab of an aluminum current collector having a thickness of 20 *µ*m and dried to form a conductive polymer layer having a thickness of 1 *µ*m on one surface of the electrode current collector. The total thickness of the current collector coated with the conductive polymer was 21 *µ*m.

LiCoO₂, carbon black, and poly(vinylidene fluoride) were added at a weight ratio of 97.5:1:1.5 to an N-methyl-2-pyrrolidone (NMP) solution, and then mixed to prepare a slurry for forming an electrode active material layer. The solid content of the slurry for forming the electrode active material layer was 60 wt.%.

The slurry for forming an electrode active material layer was coated onto the electrode current collector on which the conductive polymer layer was formed, dried and subjected to a roll press to manufacture an electrode having a total thickness of 50 *µ*m.

### Example 2

An electrode was manufactured in the same manner as in Example 1, except that the conductive polymer solution was coated so that the thickness of the conductive polymer layer formed on one surface of the current collector was 10 *µ*m.

### Example 3

An electrode was manufactured in the same manner as in Example 1, except that a conductive polymer synthesized in accordance with the following [Reaction Scheme 2] was used.

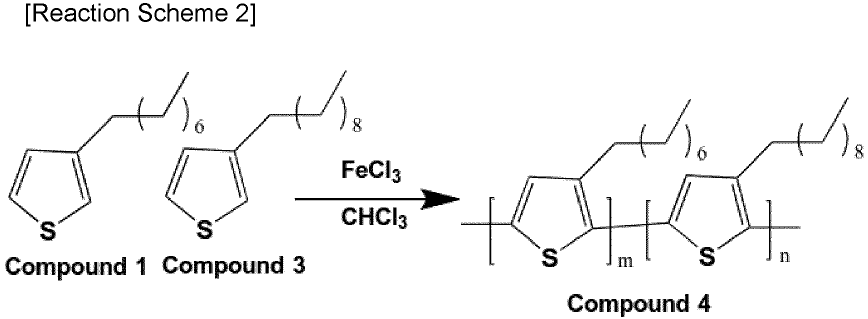

Specifically, 1.23 g (6.26 mmol) of 3-octylthiophene and 1.41 g (6.26 mmol) of 3-decylthiophene were added to a solution in which 6.09 g (37.6 mmol) of iron (III) chloride was dissolved in 200 ml of methylene chloride, and the mixture was stirred at room temperature for 24 hours. The mixed solution was placed in an osmosis membrane with a MWCO (molecular weight of cut off) of 5000, and then immersed in 150 mL of acetonitrile solvent to selectively remove unreacted iron(III) chloride and remaining reactants. The residue precipitated inside the osmosis membrane was washed with methanol, and dried at room temperature. Thereby, a polythiophene-based polymer having the same structure as Compound 4 and having a weight average molecular weight of 33,000 g/mol was obtained as a conductive polymer.

### Comparative Example 1

An electrode was manufactured in the same manner as in Example 1, except that a conductive polymer was not coated onto one surface of the electrode current collector.

### Comparative Example 2

LiCoO₂, carbon black, poly(vinylidene fluoride) and the conductive polymer obtained in Example 1 were added at a weight ratio of 95.5:1:1.5:2 to an N-methyl-2-pyrrolidone (NMP) solution, and then mixed to prepare a slurry for forming an electrode active material layer. The solid content of the slurry for forming an electrode active material layer was 60 wt.%.

The slurry for forming an electrode active material layer was coated onto an aluminum current collector having a thickness of 20 *µ*m, dried and subjected to a roll press to manufacture an electrode having a total thickness of 50 *µ*m.

### Comparative Example 3

An electrode was manufactured in the same manner as in Example 1, except that poly(isothianaphthene) was used as a conductive polymer.

### Comparative Example 4

An electrode was manufactured in the same manner as in Example 1, except that a conductive polymer synthesized in accordance with the following [Reaction Scheme 3].

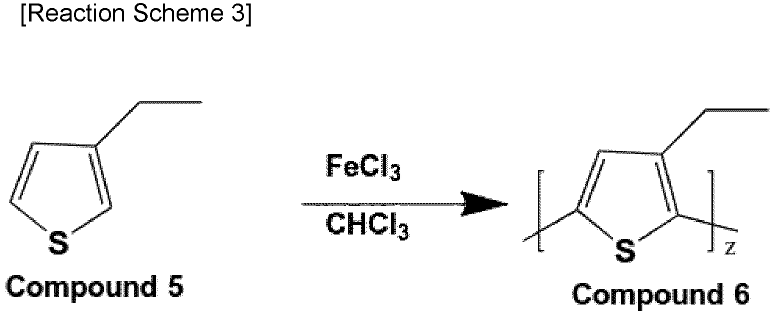

Specifically, 2.5 g (22.3 mmol) of 3-ethylthiophene was added to a solution in which 10.84 g (66.85 mmol) of iron (III) chloride was dissolved in 200 ml of methylene chloride, and the mixture was stirred at room temperature for 24 hours. The mixed solution was placed in an osmosis membrane with a MWCO (molecular weight of cut off) of 5000, and then immersed in 150 mL of acetonitrile solvent to selectively remove unreacted iron(III) chloride and remaining reactants. The residue precipitated inside the osmosis membrane was washed with methanol, and dried at room temperature. Thereby, a polythiophene-based polymer having a weight average molecular weight of 25,000 g/mol was obtained as a conductive polymer.

### Evaluation Example

The adhesion strength between the conductive polymer layer and the electrode current collector manufactured in Examples 1 to 3 and Comparative Examples 1 to 4, the interface resistance between the conductive polymer layer and the electrode active material layer, the cycle efficiency, and the safety were evaluated, and shown in Table 1 below.

### (1) Measurement of adhesion strength between the conductive polymer layer and the electrode current collector

The electrode current collector having the conductive polymer layer formed thereon was attached and fixed to a glass plate using double-sided tape, and the strength when the electrode current collector portion was peeled off at an angle of 90° at a speed of 20 mm/min at 25°C was determined as the adhesive strength between the conductive polymer layer and the electrode current collector.

### (2) Measurement of interface resistance between the conductive polymer layer and the electrode active material layer

The interface resistance between the conductive polymer layer and the electrode active material layer in the electrodes manufactured in Examples 1 to 3 and Comparative Examples 3 to 4 was measured using a multi probe tester.

In addition, the interface resistance between the electrode current collector and the electrode active material layer in the electrodes manufactured in Comparative Examples 1 and 2 was measured using a multi probe tester.

### (3) Evaluation of cycle efficiency

Artificial graphite, carbon black, and styrene butadiene rubber were mixed at a weight ratio of 95:3.5:1.5 to prepare a slurry for forming a negative electrode active material layer, which was coated onto one surface of a copper thin film with a thickness of 8 *µ*m, dried and rolled using a roll press to manufacture a negative electrode.

A polyethylene fabric having a thickness of 10 *µ*m was interposed between the electrode (positive electrode) and the negative electrode manufactured in Examples 1 to 3 and Comparative Examples 1 to 4, and pressed under the condition of 80°C to prepare an electrode assembly.

An alectrolyte solution (EC:PC:EP:PP=2:1:2.5:4.5, LiPF₆ 1.4M) (ionic conductivity ≥ 6.5 mS/cm) was injected into the prepared electrode assembly to manufacture an electrochemical device.

The electrochemical device manufactured above was subjected to constant current/constant voltage (CC/CV) charging and 0.025C cut off charging up to 4.48 V at 0.7C rate, and subjected to constant current (CC) discharging up to 3.0V at 0.2C rate to evaluate the cycle efficiency.

### (4) Evaluation of safety

10 samples were prepared from each of the electrochemical devices manufactured above, and placed on a flat plate, and an iron rod with a diameter of 15.8 mm was placed thereon, and then a weight of 9.1 kg was freely dropped from a height of 61 cm above. An impact test was carried out throughout such a process to confirm the existence of ignition of the electrochemical device.

**[Table 1]**

| | Thickness of conductive polymer layer (*µ*m) | Adhesion strength between the conductive polymer layer and the electrode current collector (gf/20mm) | Interface resistance between the conductive polymer layer (or current collector) and the electrode active material layer (ohm·cm²) | Cycle efficiency (300 cycles) | Safety (Impact test) Pass/Total |
|---|---|---|---|---|---|
| Example 1 | 1 | 246 | 0.62 | 92.2% | 9/10 |
| Example 2 | 10 | 237 | 4.32 | 75.1% | 9/10 |
| Example 3 | 1 | 212 | 0.49 | 90.1% | 8/10 |
| Comparative Example 1 | 0 | - | 0.21 | 92.5% | 0/10 |
| Comparative Example 2 | 0 | - | 0.33 | 91.9% | 5/10 |
| Comparative Example 3 | 1 | 84 | 0.57 | 92.4% | 3/10 |
| Comparative Example 4 | 1 | 28 | 0.33 | 90.3% | 2/10 |

As can be seen in Table 1, it can be confirmed that as Examples 1 to 3 comprises the conductive polymer layer, they have excellent safety.

In particular, it can be confirmed that Examples 1 and 3 have more excellent cycle efficiency than Example 2 because the interface resistance between the conductive polymer layer and the electrode active material layer was 3.0 ohm cm² or less.

In addition, it can be confirmed that Example 1 has more excellent adhesion strength between the conductive polymer layer and the electrode current collector, and thus, was further improved in safety as compared to Example 3.

On the other hand, since Comparative Examples 1 and 2 do not comprise the conductive polymer layer, they cannot secure sufficient safety.

In particular, it can be confirmed that despite Comparative Example 3 and Comparative Example 4 comprise a conductive polymer layer, they failed to secure sufficient adhesion strength between the conductive polymer layer and the current collector because the types of the conductive polymers used were different.

### [Description of Reference Numerals]

1: electrode for electrochemical device
10: electrode current collector
20: conductive polymer layer
30: electrode active material layer

## Claims

1. An electrode for an electrochemical device comprising:
an electrode current collector;
a conductive polymer layer that is located on at least one surface of the electrode current collector; and
an electrode active material layer that is located on an upper surface of the conductive polymer layer and includes an electrode active material and a binder polymer,
wherein the conductive polymer layer includes a poly(thiophene)-based polymer represented by the following Chemical Formula 1: 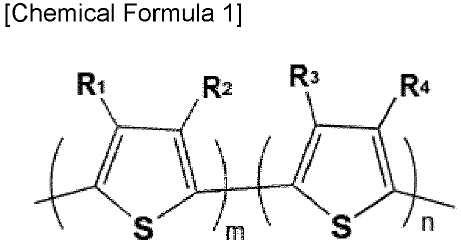
wherein, in Chemical Formula 1,
R₁, R₂, R₃ and R₄ are each independently hydrogen or a substituted or unsubstituted alkyl group having 1 to 20 carbon atoms, at least one of a total number of carbon atoms of R₁ and R₂ and a total number of carbon atoms of R₃ and R₄ is 3 or more,
m and n are each independently an integer of 0 to 20,000, and m+n > 0.

2. The electrode for an electrochemical device according to claim 1, wherein:
an adhesive strength between the conductive polymer layer and the electrode current collector is 200 gf/20 mm or more.

3. The electrode for an electrochemical device according to claim 1, wherein:
an interface resistance between the conductive polymer layer and the electrode active material layer is 3.0 ohm·cm² or less.

4. The electrode for an electrochemical device according to claim 1, wherein:
at least one of a total number of carbon atoms of R₁ and R₂ and a total number of carbon atoms of R₃ and R₄ is 5 or more.

5. The electrode for an electrochemical device according to claim 1, wherein:
the m or n is 0.

6. The electrode for an electrochemical device according to claim 1, wherein:
the conductive polymer layer has a thickness of 0.1 *µ*m to 8 *µ*m.

7. The electrode for an electrochemical device according to claim 1, wherein:
the conductive polymer layer further comprises poly(aniline)-based polymer; poly(pyrrole)-based polymer; poly(phenylene)-based polymer; poly(acetylene)-based polymer; derivatives thereof; or two or more kinds thereof.

8. The electrode for an electrochemical device according to claim 1, wherein:
the electrode for an electrochemical device is a positive electrode.

9. An electrochemical device comprising a positive electrode, a negative electrode, and a separator interposed between the positive electrode and the negative electrode,
wherein the positive electrode or the negative electrode comprises the electrode for an electrochemical device according to any one of claims 1 to 8.
